## Europäisches Patentamt
## European Patent Office
## Office européen des brevets

(11) Veröffentlichungsnummer: **0 199 952**
**B1**

(12) **EUROPÄISCHE PATENTSCHRIFT**

(45) Veröffentlichungstag der Patentschrift:
**10.08.88**

(51) Int. Cl.⁴: **F 16 F 9/06**

(21) Anmeldenummer: **86103519.4**

(22) Anmeldetag: **15.03.86**

(54) **Rollbalg für Fahrzeug-Luftfederungen.**

(30) Priorität: **03.05.85 DE 3515942**

(43) Veröffentlichungstag der Anmeldung:
**10.12.86 Patentblatt 86/45**

(45) Bekanntmachung des Hinweises auf die Patenterteilung:
**10.08.88 Patentblatt 88/32**

(84) Benannte Vertragsstaaten:
**AT BE CH DE FR GB IT LI LU NL SE**

(56) Entgegenhaltungen:
**CH-A-409 533**
**DE-A-1 956 811**
**DE-A-3 318 060**
**US-A-2 192 355**
**US-A-3 603 350**
**US-A-4 386 791**

(73) Patentinhaber: **Continental Aktiengesellschaft,
Königsworther Platz 1, D-3000 Hannover 1 (DE)**

(72) Erfinder: **Drescher, Gunter, Peperfeld 76, D-3000
Hannover 91 (DE)**
Erfinder: **Fankhänel, Gerhard, Am Flöth 67, D-3000
Hannover 61 (DE)**
Erfinder: **Gnirk, Wolfgang, Schubertstrasse 17,
D-3160 Lehrte (DE)**

## Beschreibung

Die Erfindung bezieht sich auf Rollbälge für Fahrzeug-Luftfederungen, die in Form von im wesentlichen zylindrischen Schlauchkörpern mit einem oder beiden Endwulsten von eingezogenen Durchmesser aus Gummi oder gummiänlichem Kunststoff mit Verstärkungseinlagen hergestellt sind und im Einbauzustand sich mit dem Endwulst bzw. den Endwulsten benachbarten Ringflächen wechselnder axialer Breite an gegeneinander beweglichen starren Fahrzeugteilen abstützen.

Nach einem aus der deutschen Patentschrift 1 956 811 bekannten Vorschlag sind solche Luftfederbälge im Bereiche der mit den starren Fahrzeugteilen in ihre Berührung tretenden Endflächen mit als Vertiefungen in ihre Außenwand eingeformten Umfangsrillen versehen, womit der Abbau schädlicher Spannungen und das selbsttätige Abstoßen eindringender Fremdkörper im Verlaufe der Abrollbewegungen bezweckt werden. Wenn dies auch zweifellos zu günstigeren Ausgangsbedingungen im Abriebverhalten und daraus folgend für die Lebensdauer der solcherart gerillten Bälge im Vergleich zu üblichen glattwandigen Rollbälgen führte, bestand nichtsdestoweniger in der Praxis nach wie vor der Wunsch nach weiteren Verbesserungen. Es ist demgemäß die Aufgabe der Erfindung, mit einer neuartigen Gestaltung der in Fahrzeug-Luftfedersystemen verwendeten Rollbälge deren Gebrauchswert weiterhin anzuheben mit dem Ziel, höhere Zahlen von Lastwechseln bis zum Auftreten von Rissen und anderen Ermüdungserscheinungen zu ermöglichen.

Nach der Erfindung sind Rollbälge der eingangs geschilderten Gattung im Bereich der an die Endwulste anschließenden Ringflächen mit an die Balgaußenwand erhaben angeformten axial oder im wesentlichen axial ausgerichteten Rippen ausgebildet, wobei in vorteilhafter Weiterbildung der Erfindung jeweils benachbarte Rippen gegenseitige Abstände von einem Mehrfachen ihrer Breite entsprechender Größenordnung und die Rippen selbst eine Quadratische oder rechteckige Querschnittsform aufweisen können und die Höhe der Rippen über der Balgaußenwand zweckmäßig in einer einem geringen Bruchteil der Wandstärke entsprechenden Größenordnung bemessen ist.

Die erfindungsgemäße Oberflächenstrukturierung der Rollbälge in ihren auf den zugekehrten starren Fahrzeugteilen sich abwälzenden Berührungszonen hat überraschend nicht vorhersehbare wesentliche Verbesserungen sowohl hinsichtlich ihres Verformungsverhaltens als auch auf längere Sicht gesehen hinsichtlich ihrer ungestörten Gebrauchsdauer als Ergebnis. Es ist dies wahrscheinlich darauf zurückzuführen, daß die Balgwandungen nicht in üblicher Weise ganzflächig mit den starren Stützelementen in Berührung treten, sondern auf diesen unmittelbar nur über die in der Bewegungsrichtung verlaufenden Rippen abrollen, wodurch einmal das knickfreie kontinuierliche Wandern der über einen Radius gewölbten Rollfalte begünstigt und zum anderen auch der unvermeidliche Abrieb gering gehalten und darüber hinaus noch dem Wachsen mechanisch oder anderweitig hervorgerufener Oberflächeneinrisse wirksam vorgebeugt wird.

In weiterer Ausgestaltung des Erfindungsgedankens empfiehlt es sich, in den Zwischenraum zwischen jeweils benachbarten Rippen mit gegenseitigen Abständen in gleichmäßiger Verteilung aufeinanderfolgende Oberflächenerhebungen beispielsweise in Form von in Querrichtung zu den Rippen parallel zueinander verlaufenden Stegen anzuformen. Diese Oberflächenerhebungen, deren Höhe über der Balgaußenwand zweckmäßig kleiner als die der Rippen bemessen ist, wirken dem Festsetzen von Fremdkörpern wie etwa Sandkörnern oder Steinchen vom Straßenbelag zwischen den Rippen mit der Gefahr übermäßigen Abriebs und örtlicher Wandzerstörungen entgegen.

Zum Verdeutlichen der Erfindung ist ein Ausführungsbeispiel in der Zeichnung schematisch dargestellt. In der Zeichnung ist:

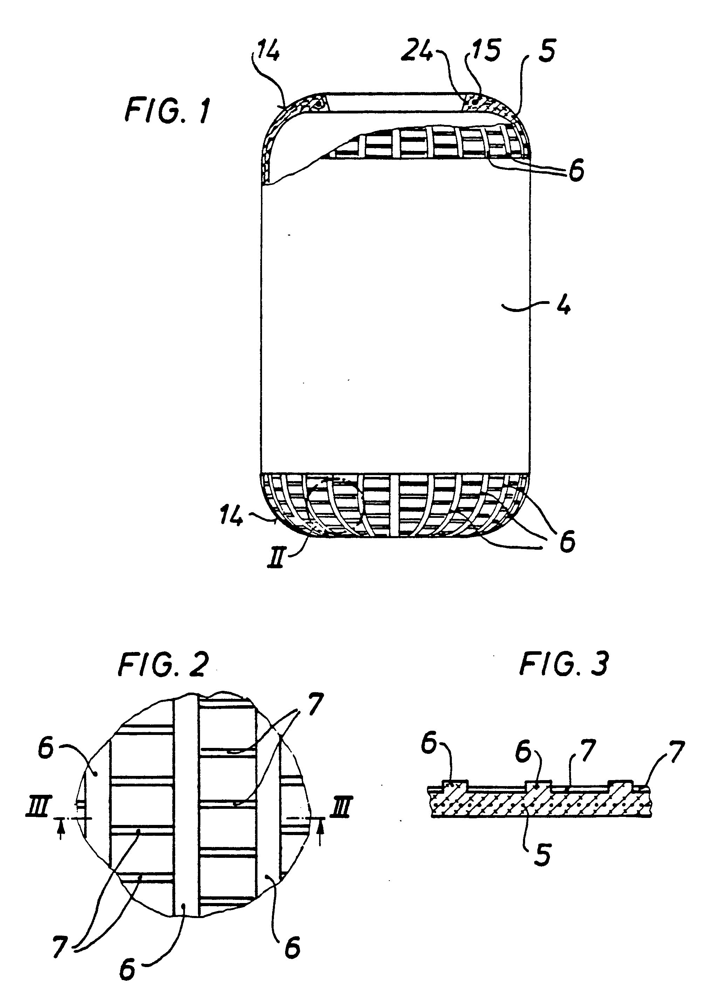

Fig. 1 ein Luftfederrollbalg im Herstellungszustand in Teilschnittdarstellung;
Fig. 2 ein Ausschnitt nach der Kreisfläche II in Fig. 1 in vergrößertem Maßstab und
Fig. 3 ein Schnitt nach der Linie III + III in Fig. 2.

Der gezeichnete Rollbalg 4 ist als zylindrischer Schlauchkörper mit über Abrundungsbogen 14 an beiden Enden auf einen kleineren Durchmesser eingezogenen Öffnungen aus einem ölbeständigen Gummi mit eingebetteten Verstärkungen 5 hergestellt. Die Öffnungsränder sind zum druckdichten Befestigen des Balges an den nicht gezeichneten zugeordneten Fahrzeugteilen in Form von Endwulsten 24 verdickt und mit eingebetteten zugfesten Kernringen 15 verstärkt, wobei die Kernringe gleichzeitig auch zum Verankern der über die gesamte Länge des Balges durchlaufenden Verstärkungseinlagen 5 dienen.

In seinen die Abrundungsbogen 14 einschließenden beiden Endabschnitten ist der sonst glattwandige Rollbalg 4 mit auf seiner Außenwand angeformten radialen Rippen 6 ausgebildet. Die bis unmittelbar an die Endwulste 24 geführten Rippen 6 haben einen etwa rechteckförmigen Querschnitt und ragen mit einer in einer Größenordnung von höchstens bis zu 1 mm bemessenen Höhe über die Balgwandung empor. In den Zwischenräumen zwischen jeweils benachbarten Rippen sind vergleichsweise schmale, gegenüber den Rippen 6 niedrigere Stege 7 in Querrichtung angeformt. In dem gezeichneten Ausführungsbeispiel sind einander benachbarte Stegreihen in Axialrichtung gegeneinander versetzt angeordnet. Es könnte stattdessen aber auch ein in Umfangsrichtung durchlaufendes Verteilungsmuster gewählt werden. Ebenso wäre es ohne Wirkungseinbußen möglich, die Stege 7 durch Noppen, Stifte oder andere Oberflächenerhebungen zu ersetzen. Die Erfindung ist sinngemäß anwendbar bei solchen Bälgen, die nur an einem Ende einen Wulst mit eingezogenem Durchmesser haben.

**Patentansprüche**

1. Rollbalg für Fahrzeug-Luftfederungen, der in Form eines im wesentlichen zylindrischen Schlauchkörpers mit einem oder beiden Endwulsten (24) von eingezogenem Durchmesser aus Gummi oder gummiähnlichem Kunststoff mit Verstärkungseinlagen (5) hergestellt ist und im Einbauzustand sich mit dem Endwulst bzw. den Endwulsten benachbarten Ringflächen wechselnder axialer Breite an gegeneinander beweglichen starren Fahrzeugteilen abstütz, dadurch gekennzeichnet, daß er im Bereich der Ringflächen mit an die Balgaußenwand erhaben angeformten axial oder im wesentlichen axial ausgerichteten Rippen (6) ausgebildet ist.

2. Rollbalg nach Anspruch 1, dadurch gekennzeichnet, daß jeweils benachbarte Rippen (6) gegenseitige Abstände von einem Mehrfachen ihrer Breite entsprechender Größenordnung aufweisen.

3. Rollbalg nach den Ansprüchen 1 und 2, dadurch gekennzeichnet, daß die Rippen (6) eine quadratische oder rechteckige Querschnittsform aufweisen.

4. Rollbalg nach den Ansprüchen 1 bis 3, dadurch gekennzeichnet, daß die Höhe der Rippen (6) über der Balgaußenwand in einer einem geringen Bruchteil der Wandstärke entsprechenden Größenordnung bemessen ist.

5. Rollbalg nach den Ansprüchen 1 bis 4, dadurch gekennzeichnet, daß in den Zwischenräumen zwischen jeweils benachbarten Rippen (6) mit gegenseitigen Abstânden in gleichmäßiger Verteilung aufeinanderfolgende Oberflächenerhebungen angeformt sind.

6. Rollbalg nach Anspruch 5, dadurch gekennzeichnet, daß die Höhe der Oberflächenerhebungen über der Balgaußenwand kleiner als die der Rippen (6) bemessen ist.

7. Rollbalg nach den Ansprüchen 5 und 6, dadurch gekennzeichnet, daß die Oberflächenerhebungen die Form von in Querrichtung zu den Rippen (6) parallel zueinander verlaufenden Stegen (7) aufweisen.

**Claims**

1. Roller bellows for pneumatic vehicle suspensions, which is produced in the form of a substantially cylindrical tubular body having one or two end beads (24) of a retracted diameter formed from rubber or rubber-like plastics material with reinforcng members (5) and is supported, in the assembled position, on rigid vehicle component parts, which are displaceable relative to one another, by annular surfaces of varying axial width which are adjacent to the end bead or end beads respectively, characterised in that, in the region of the annular surfaces, the roller bellows is provided with ribs (6) which are moulded to fit on the outer wall of the bellows in a raised manner and are axially or substantially axially orientated.

2. Roller bellows according to claim 1, characterised in that respective adjacent ribs (6) have mutual spacings of an order of magnitude corresponding to a multiple of their width.

3. Roller bellows according to claims 1 and 2, characterised in that the ribs (6) have a square or rectangular cross-sectional form.

4. Roller bellows according to claims 1 to 3, characterised in that the height of the ribs (6) above the outer wall of the bellows is dimensioned to be of an order of magnitude corresponding to a small fraction of the wall thickness.

5. Roller bellows according to claims 1 to 4, characterised in that raised surface portions, which succeed one another in a uniform distribution at mutual spacings, are moulded to fit in the gaps between respective adjacent ribs (6).

6. Roller bellows according to claim 5, characterised in that the height of the raised surface portions above the outer wall of the bellows is dimensioned to be smaller than that of the ribs (6).

7. Roller bellows according to claims 5 and 6, characterised in that the raised surface portions are in the form of webs (7) which extend parallel to one another in the transverse direction relative to the ribs (6).

**Revendications**

1. Soufflet roulant pour suspensions pneumatiques de véhicules, qui est fabriqué sous la forme de tuyau souple sensiblement cylindrique comportant un ou deux bourrelets d'extrémité de diamètre réduit en caoutchouc ou en une matière plastique semblable au caoutchouc, avec des inserts de renforcement et qui s'appuie, dans la condition d'installation, avec des surfaces annulaires de largeur axiale variable, adjacentes au bourrelet d'extrémité ou aux bourrelets d'extrémité, contre des parties rigides du véhicule mobiles l'une par rapport à l'autre, caractérisé en ce qu'il est pourvu, dans une zone des surfaces annulaires, de nervures (6) formées en saillie sur la paroi extérieure du soufflet et orientées axialement ou sensiblement axialement.

2. Soufflet roulant selon la revendication 1,

caractérisé en ce que les nervures respectivement adjacentes (6) sont espacées l'une de l'autre d'une distance d'un ordre de grandeur correspondant à un multiple de leur largeur.

3. Soufflet roulant selon les revendications 1 et 2, caractérisé en ce que les nervures (6) ont une forme de section droite carrée ou rectangulaire.

4. Soufflet roulant selon les revendications 1 à 3, caractérisé en ce que la hauteur des nervures (6) au-dessus de la paroi extérieure du soufflet est dimensionnée avec un ordre de grandeur correspondant à une petite fraction de l'épaisseur de paroi.

5. Soufflet roulant selon les revendications 1 à 4, caractérisé en ce que dans les volumes intercalaires entre des nervures mutuellement adjacentes (6) sont formées des saillies superficielles espacées l'une de l'autre et se suivant avec une répartition uniforme.

6. Soufflet roulant selon la revendication 5, caractérisé en ce que la hauteur des saillies superficielles au-dessus de la paroi extérieure du soufflet est plus petite que celle des nervures (6).

7. Soufflet roulant selon les revendications 5 et 6, caractérisé en ce que les saillies superficielles ont la forme de moulures (7) orientées parallèlement entre elles dans une direction transversale aux nervures (6).

FIG. 1

FIG. 2

FIG. 3